Europäisches Patentamt

(19) European Patent Office

Office européen des brevets

(11) Publication number: **0 047 249**
**B1**

(12) EUROPEAN PATENT SPECIFICATION

(45) Date of publication of patent specification: **11.07.84**

(51) Int. Cl.³: **A 23 K 3/03**

(21) Application number: **81900223.9**

(22) Date of filing: **12.01.81**

(86) International application number:
**PCT/FI81/00001**

(87) International publication number:
**WO 81/01944 23.07.81 Gazette 81/17**

(54) THE PROCESS FOR PRESERVING DAMP BIO MASS.

(30) Priority: **14.01.80 FI 800094**

(43) Date of publication of application:
**17.03.82 Bulletin 82/11**

(45) Publication of the grant of the patent:
**11.07.84 Bulletin 84/28**

(84) Designated Contracting States:
**FR**

(56) References cited:
**US - A - 2 748 001**
**US - A - 2 808 332**
**US - A - 3 180 735**
**US - A - 3 585 043**

Chemical Abstracts, vol. 93 (1980), abstract No. 131086a. Ann. Ist. Sper. Zootec. 1978, 11(1), 129-44 (Ital.)
Chemical Abstracts, vol. 92 (1980), abstract No 179331h Ved. Pr. Vysk. Ustavu Zivocisnej Vyroby Nitre 1979, 17, 11-18 (SLO)
Commonwealth Agricultural Bureaux (CAB) No. 77847859 Animal Production 1976, 23 (2) 191-196 (Engl.)

(73) Proprietor: **SOMEX OY**
**SF-31400 Somero (FI)**

(72) Inventor: **TUOMIKOSKI, Veli**
**Vänr. Stoolinkatu 3 A 19**
**SF-00100 Helsinki 10 (FI)**

(74) Representative: **Blétry, Robert et al,**
**OFFICE BLETRY 2, Boulevard de Strasbourg**
**F-75010 Paris (FR)**

Commonwealth Agricultural Bureaux (CAB) No. 77978777 Vyskumny Ustav Zivocisnej Vyroby, Nitra Czechoslovakia Nas Chov. 1977, 2, 75-77 (SLO.)
Commonwealth Agricultural Bureaux (CAB) No. 80095591 Publication, Laboratoire de Biochimie de la Nutrition, Faculté des Sciences Agronomiques, Louvain 1979, 26, 27 pp (French)
Commonwealth Agricultural Bureaux (CAB) No. 80416669 Annali dell'Istituto Sperimentale per la Zootecnia 1978, 11 (1), 129-144 (Ital.)

Courier Press, Leamington Spa, England.

## Description

The process for preserving damp bio mass.

The invention concerns a process to preserve moist cell-mass, such as straw, hay, fresh fodder, seeds, whole grain (straw and grain in one), grain hull waste, byproducts of potato industry, sugarbeet cuttings, products of the cellulose industry (cellulose, O-fibre), wood cells handled by various methods, softcells of energy forest production and bio mass in general, by adding urea and ureaphosphate in solid form, either in separate or common crystals, to the mass to be handled. Other minerals or additives, needed by animals, may be added with the crystals.

The use of ammonia has been known earlier as a material in handling straw feed. Its source has usually been liquid ammonia under pressure, sometimes 25% solution of ammonia. Both materials have their own disadvantages, including toxidity and the transportation in high pressure vessels as for liquid ammonia.

The use of urea is known in feed preserves made from corn produce. Small quantities of urea are used primarily as stabilizers in preservative liquids. US-patent 3 063 839 relates to the use of urea in grass and to its drying afterwards. FI-patent 54225 relates to a process in which green flour containing ureaphosphoric acid is made by adding phosphoric acid urea fluid to fresh grass and drying it in high temperature.

In the researches and tests made by the applicant, it has become evident, that by adding urea in the harvesting phase of moist straw, hay or grass, the feed can be preserved and its feed value can be improved essentially and even better results are obtained if simultaneously with urea, ureaphosphate is used. The multiplication of microbes is prevented by starting the process in as early a phase of the harvesting as possible, which is of great importance to their quantity and so to the prevention of dust lung disease, which is found in the cattletenders. The substance may be added in doses within the bales or within the bale layers or into loose material. The process saves energy, because extra handling and turning over becomes unnecessary. Especially great savings in energy are obtained in the whole grain preserving. Thus the feed grain is harvested in the ripening phase with grain and straw into the silo or is baled. The preservative can be added in connection with cutting or loading. The threshing of the grain and drying and milling following after that, which require lots of energy and investments, are left out. In addition to the fibre of straw, also the hull of the grain becomes more easily digestable, which assists in the utilization of the heart of the grain. The process enables the industry refining the aforementioned coarse feed to obtain faultless raw material. Large amounts of so called softcells, leaves and yearlings are generated in the production of the energy forest, the preserving and improving of the feed value of which is solved by the process described before. The tests to preserve the byproducts of industry such as sugarbeet cuttings and potato pulp, have been successful. By adding urea-ureaphosphate mixture to cellmass, to the maximum retentivity, the corresponding quantity of nitrogen and phosphorus needed in feeding, a condensate is obtained, which is useful as raw material for feed industry. If needed, other minerals, additives and ureaenzymes may be added.

The period of use in industry connected with the agriculture is generally only a few months in a year. During the short season, in addition to the regular production, large amounts of cellmass byproduct, which in general has to be dried immediately, needs to be handled.

Because the capacity of the driers is to be measured to meet the production peaks, the investment costs form significant amounts. Due to the invention the moist cellmass can be stored at the same time as its feed value improves. The drying can be arranged to be done as for the resources at the more advantageous time.

## The Effective Mechanism of Urea and Ureaphosphate

Due to the ureaenzymes, urea converts to ammonia and carbon dioxide. Both materials improve preserving, because they limit the breathing of the cells and function of certain microbes. Ammonia reacts with fibrous mass improving the digestibility of it. As gaseous material, ammonia and carbon dioxide evenly spread to the material to be treated. Ureaenzyme is always present in a biomass as a result of microbe function. A part of urea reacts with the component parts of the cell when slowly acting, very useful nitrogen combinations for animals are generated.

The ambient temperature, moisture and degree of the acidity has an essential effect on the decomposition speed of the urea. In favourable conditions the decomposition occurs very quickly. For preserving of the straw the beginning of reactions fast enough in damp mass is of an importance. The fact that the decomposition continues for a long time is advantageous. The general rule of chemical reactions is valid also to the decomposition of urea. Ten degrees (C°) rise in temperature doubles the reaction speed. So the warming up of the feed mass accelerates the disengagement of ammonia and carbon dioxide.

Ureaphosphate is acidic in nature and decomposes under moist conditions mainly to urea and phosphoric acid. It also has a mould growth preventing influence. Due to its acidity, it binds ammonia to the feedmass and promotes reactions between the fibrous materials of the feed and urea, thus improving the digestibility of the feed.

## Mixture Ratio and Quantity of use

The limits of practice in the urea-ureaphosphate composition "RT-granule" in accordance with the invention have been 3-30% ureaphosphate and 97-70% urea. The quantity of use has varied from 3% to 20% of dry content of the feed in normal use. When preparing the condensates the maximum bonding capability of the cell mass has been utilized, in other words, the addition of the mixture corresponds to the amount of the dry content of the moist mass.

## Examples of Adaption

The following describes the practical results of adaptions of the method according to the invention. Examples 1, 2 and 7 are not Examples falling within the scope of the claims.

## Example 1
### Treatment of Straw with Urea

In the baling phase urea was added to moist straw in amount of 5% of the weight of the straw. The dry contents of straw was 72%. The 5% addition of urea corresponds to 3% addition of ammonia nitrogen ($NH_4$). The ability of preserving and feed analysis corresponded to the results obtained with liquid ammonia.

## Example 2
### Treatment of Straw with Ureaphosphate-ammonia

When studying the efficiency of ureaphosphate as a bonding agent of the ammonia to the straw mass baled barley of about 1000 kg was stacked to an oblong pile. The pile was divided into three areas. The one end was treated with 4% ureaphosphate and the other end with 8% ureaphosphate which was spread between the layers of the bale. To the middle area no ureaphosphate was added. The pile was covered by a plastic cover and was treated in a normal way with ammonia (40 kg/straw ton). Thus the same quantity of ammonia spread to areas treated with ureaphosphate and to the untreated one third. For comparison purpose an equivalent pile was prepared.Samples were analysed 3 months after the treatment. In the feed analysis, Table 1, it becomes evident, that the quantity of raw fibre in sample treated by ureaphosphate is essentially smaller than in those samples treated only by ammonia. This can be considered as a criteria for ripening of the straw or for the decomposition of fibre materials which are not easily digestible. The filling values of the fodder·show clearly the same tendency.

In nitrogen values of the fodder, e.g. in protein strength becomes evident the nitrogen bonding effect of ureaphosphate. The treatment with ureaphosphate has increased the protein strength by 2.5 times as compared with the samples treated only with ammonia. By airing the samples to about 90% of the weight of the dry content it was desired to find out the portion of ammonia which evaporates freely from the fodder. In the light of the results this seems to remain rather small also in cases where the nitrogen content of the fodder, due to the ureaphosphate, is rather high.

## Example 3
### Treatment of Whole Grain with Ureaphosphate-Urea Mixture Compared with Ammonia Treatment

For the test, aired barley with its quick couch growth was harvested by a reel chaffer, portion of which was treated with ammonia and portion with ureaphosphate-urea mixture. The dry content of the harvested crop was about 30%. Preserving was done in a normal way to a horizontal silo by packing with a tractor. Ammonia fodder was stocked to the rear end of the silo and was covered with a plastic cover. 40 kg liquid ammonia was used per one dry content ton of the fodder. Because the fodder was wet, closely spaced holes were made. In the pile having a surface area of 5 × 6 meters, 30 breathing holes were put in from above and each hole was prepared carefully by moving the breathing pipe vertically.

Ureaphosphate-urea fodder was prepared in the front end of the silo. The mixture was sown in the unloading section of the elevator in a self unloading trailer, whereby it was mixed up with the feed mass. The fodder was packed with a tractor, although it remained looser than the previous one. The pile was covered by a plastic cover similarly as in the ammonia treatment. The mixture constituants were 13% ureaphosphate and 87% urea. The total amount of ureaphosphate-urea mixture was 8,4% from the dry material of the fodder.

Table 2 shows that the greatest differences are in nitrogen values. Also filling value seems to be better with the ureaphosphate-urea mixture. In-vitro-digestibilities are 67.4% with ammonia fodder and 71.9% with mixture fodder.

When the fodder piles were opened after 5,5 months for feeding tests, it was found, that the ammonia stack had heated up and was spoiled, but the ureaphosphate-urea stack was well preserved. It is evident that ammonia cannot be spread sufficiently, but the most part of the ammonia will remain around the breathing hole. This was found also during this test, although the work was done most carefully and the quantity of holes was one hole per square meter.

## Example 4
### Treatment of Damp Hay with Ureaphosphate-Urea Mixture

Plenty of rootgrass containing grass was preserved by treating it with ureaphosphate-urea mixture during baling. The untreated bale stacks warmed up, but cooled down when the bales were stacked again and a mixture consisting of 20% of ureaphosphate and 80% of urea was added between the layers. The mixture content used was 5% from dry weight of the fodder.

In another test, straw stack of 15,000 kg, which was warmed up, was piled up again so that 20% of ureaphosphate and 80% of urea was added between the layers of the bales. The total amount of mixture was 2,5% of the straw weight. The temperature went down and the straws preserved well. In neither case plastic nor other cover was used. The bale stacks were in a barn.

### Example 5
### Treatment of Fresh Fodder with
### Ureaphosphate-Urea Mixture

The limits of the method were tested by baling immediately after mowing green hay growth, the length of which was 30-40 cm. Treatment was done during baling. A small additional portion of ureaphosphate-urea mixture was added between the bale layers. The fodder did not get mouldy and the animals eat it with pleasure.

### Example 6
### Treatment of Damp Grain with
### Ureaphosphate-Urea Mixture

In preserving damp grain a mixture proportion of 20% of ureaphosphate and 80% of urea was used. The dose quantity was 5% mixture of the dry content of the fodder. In one case, the treatment was necessary to eliminate the mould already developed. Especially the softening of the hull portion of the grain and the improvement of digestibility was observed. In practice this is of great importance, being so that the hull covers the digestible portion of the grain, when a part of the grain goes through the alimentary canal without breaking up. Further the hull part of the oat for instance consists of almost one fourth of the weight of the grain.

The softening of the hull of oat which comes as a waste of the grain milling industry, has been tried in practical scale in feeding meat cattle, with good results.

### Example 7
### Treatment of Byproducts of
### Food Industry with Ureaphosphate-Urea Mixture

Potato pulp and sugarbeet cuttings, the dry content of which was 20%, was treated for the purpose of preserving and preparing the nitrogenous feed. The quantities of use in the latter case were 10-30% of the wet weight of the cellmass. The untreated samples were quickly spoilt, others have been preserved well.

### Example 8
### Treatment of Straw with
### Ureaphosphate-Urea Mixture

Tables 3 and 4 show the effect of ammonia treatment and correspondingly ureaphosphate-urea treatment on the fodder value of the straw. The results show that with the method according to the invention clearly better results are accomplished as far as the filling and nitrogen values are concerned.

### Example 9
### Result of the Feeding Tests with
### Fodder Prepared with Ureaphosphate-Urea
### Mixture

Fodders, prepared in accordance with the invention, have been fed both for meat and milk producing cattle. From the results can be drawn conclusions that it is no need to give special protein feed, but the animals can use the nitrogen combinations of the method for forming of the protein quite in a different manner than in a plain urea feeding for instance. A considerable part of the need of energy for animals becomes filled with the fodder prepared according to the invention. The health of the cattle has been good, the growth of the animals and the production and quality of milk has been normal. The gestation was better than normal due to the phosphorous of good quality received from feeding.

As shown above, the use of ureaphosphate-urea to preserve cell mass and to improve its feed value, solves many problems. It gives better results than the treatment with urea and is easier to accomplish than the treatment with urea-phosphoric acid. The addition of ureaphosphate-urea mixture in solid form to the damp bio mass is safe, advantageous and efficient.

## TABLE 1
## Combined Effect of Ureaphosphate and Ammonia
### Test started 25.8.1978. Samples collected 17.11.1978

| Test member | Dry material % | Ash % from dm | Raw fibre % from dm | Raw grease % from dm | $NH_4$—N % from dm | $\Sigma N$ % from dm | Raw protein % from dm | Extracts without nitrogen % from dm | Fodder unit value fu/100 kg | Compensation no kg/fu | Filling value kg dm/fu | Protein strength g drp/fu | P% |
|---|---|---|---|---|---|---|---|---|---|---|---|---|---|
| No treatment | 88,94 | 9,05 | 45,22 | 1,14 | 0,07 | 0,90 | 5,62 | 38,97 | 18,55 | 5,39 | 4,80 | 78,6 | |
| 4% $NH_4$ | 86,32 | 8,50 | 45,12 | 1,17 | 0,58 | 1,85 | 11,59 | 33,62 | 31,22 | 3,20 | 2,76 | 175,7 | |
| 4% $NH_4$ pile 2 | 84,65 | 7,49 | 44,78 | 1,18 | 0,71 | 1,77 | 11,08 | 35,47 | 31,47 | 3,18 | 2,69 | 163,8 | |
| 4% $NH_4$ matured in breeze | 90,18 | | | | 0,67 | | | | | | | | |
| 4% $NH_4$ + 4% UF | 64,95 | 9,56 | 34,76 | 1,16 | 1,69 | 5,39 | 33,68 | 20,84 | 28,03 | 3,57 | 2,32 | 429,1 | |
| 4% $NH_4$ + 4% UF matured in breeze | 89,19 | | | | 1,46 | | | | | | | | |
| 4% $NH_4$ + 8% UF | 81,27 | 11,18 | 35,11 | 1,38 | 1,85 | 6,03 | 37,68 | 14,65 | 34,31 | 2,91 | 2,37 | 490,8 | |
| 4% $NH_4$ + 8% UF matured in breeze | 88,35 | | | | 1,70 | | | | | | | | |

Note:
    drp = digestive raw protein
    UF = ureaphosphate
    dm = dry material
    fu = fodder unit

TABLE 2
Effect of Ammonia and Ureaphosphate-Ureamixture on Barley Matured in Breeze and Harvested by a Reel Chaffer

Fodder to be treated: barley with seeds and straw, plenty of quick couch growth
Used amount: $NH_3$ 4% from dry material
mixture 9% from dry material, relation of mixture 1 ureaphosphate + 6.6. urea
Treated amount: $NH_3$     26760 kg wet material —360 kg $NH_3$
mixture 12860 kg wet material     50 kg UF 330 urea

| Sample | Dry material % | Ash % from dm | Raw fibre % from dm | Raw grease % from dm | $NH_4$—N % from dm | $\Sigma N$ % from dm | Raw protein % from dm | Extracts without nitro-gen % from dm | Fodder unit value fu/100 kg | Com-pensa-tion no kg/fu | Filling value kg dm/fu | Protein strength g drp/fu | P% |
|---|---|---|---|---|---|---|---|---|---|---|---|---|---|
| $NH_3$ | 30,86 | 14,32 | 29,80 | 1,65 | 2,53 | 4,41 | 27,56 | 26,67 | 13,41 | 7,46 | 2,30 | 348,9 | 0,36 |
| Ureaphosphate mixture | 35,36 | 11,81 | 31,34 | 1,77 | 4,89 | 7,32 | 45,75 | 9,33 | 15,92 | 6,28 | 2,22 | 558,8 | 0,92 |

Time of treatment: 24.8.1978
Date of collecting the sample: 26.10.1979

## TABLE 3
## Effect of Ammonia and Ureaphosphate-Ureamixture on Straw

| | Dry material % | Ash % from dm | Raw fibre % from dm | Raw grease % from dm | $NH_4$—N % from dm | $\Sigma N$ % from dm | Raw protein % from dm | Extracts without nitrogen % from dm | Fodder unit value fu/100 kg | Compensation no kg/fu | Filling value kg dm/fu | Protein strength g drp/fu | P% |
|---|---|---|---|---|---|---|---|---|---|---|---|---|---|
| $NH_3$ 'good' | 51,58 | 4,95 | 56,18 | 0,80 | 0,85 | 2,48 | 15,51 | 22,56 | 16,08 | 6,22 | 3,21 | 273,6 | 0,09 |
| Ureaphosphate 'good' | 66,61 | 8,21 | 40,43 | 0,80 | 1,16 | 7,21 | 45,03 | 5,53 | 26,91 | 3,72 | 2,48 | 613,1 | 1,07 |
| Ureaphosphate from the middle of the bale | 53,23 | 6,02 | 42,13 | 0,88 | 3,76 | 6,16 | 38,51 | 12,46 | 21,56 | 4,62 | 2,46 | 522,9 | 1,05 |
| Ureaphosphate the surface of the bale | 32,09 | 7,69 | 43,05 | 0,77 | 4,11 | 6,20 | 38,76 | 9,73 | 12,44 | 8,04 | 2,58 | 550,0 | 1,17 |

Use amount: $NH_3$ 3% mixture (1 ureaphosphate + 2 urea) 6%
Way of treatment: between the layers of the bale
Date of collecting the samples: 5.11.1979
Ripening period: $NH_4$ straw 9 weeks
                ureaphosphate straw 5 weeks

TABLE 4
Effect of Ammonia and Ureaphosphate-Ureamixture on Straw

| Sample | Dry material % | Ash % from dm | Raw fibre % from dm | Raw grease % from dm | $NH_4$—N % from dm | $\Sigma$ N % from dm | Raw protein % from dm | Extracts without nitrogen % from dm | Fodder unit value fu/100 kg | Compensation no kg/fu | Filling value kg dm/fu | Protein strength g drp/fu | P% |
|---|---|---|---|---|---|---|---|---|---|---|---|---|---|
| $NH_3$ 3%    30.8. | 92,41 | 7,45 | 43,52 | 1,15 | 0,50 | 2,06 | 12,85 | 34,53 | 34,87 | 2,87 | 2,65 | 187,4 | 0,18 |
| $NH_3$ 3%    24.8. | 92,36 | 3,30 | 48,78 | 1,08 | 0,38 | 1,71 | 10,69 | 36,15 | 34,51 | 2,90 | 2,68 | 157,4 | 0,10 |
| UF   6%    20.9. | 89,07 | 9,28 | 36,29 | 0,84 | 0,71 | 3,37 | 21,05 | 32,54 | 36,97 | 2,71 | 2,41 | 279,0 | 0,62 |
| UF   6%    2.10. | 79,32 | 9,88 | 36,30 | 0,92 | 1,19 | 4,26 | 26,63 | 26,27 | 31,69 | 3,16 | 2,50 | 366,7 | 0,90 |
| UF   6%    2.10. | 83,66 | 6,21 | 39,95 | 0,94 | 0,80 | 3,06 | 19,13 | 33,77 | 34,55 | 2,89 | 2,42 | 254,7 | 0,53 |
| $NH_3$ 11.9.    1 bottle | 92,61 | 8,61 | 44,30 | 1,07 | 0,45 | 1,49 | 9,31 | 36,71 | 33,82 | 2,16 | 2,74 | 140,2 | 0,27 |
| 1.10.    1 bottle | | | | | | | | | | | | | |
| 5.10.    $\frac{1}{2}$ bottle | | | | | | | | | | | | | |

UF = ureaphosphate
Use amount: $NH_3$ 3%
           mixture (1 ureaphosphate + 2 urea) 6%
Way of treatment: between the layers of the bale
Date of collecting the sample: 22.10.1979

## Claim

The process for preserving moist bio mass by adding urea-phosphateurea mixture preferably in solid form to the said bio mass, characterised in that the mixture consists of 3-30% ureaphosphate and 97-70% urea, that the quantity of said mixture used is 3-20% of dry content of the mass and that the mass is preserved at least the minimum time depending on the ambient temperature, moisture and the degree of the acidity of the mass, whereby the nitrogen and the phosphorus of the urea/urea phosphate mixture react with the organic mass thereby forming nitrogen compounds suitable for digestion of the animals.

## Patentansprüch

Verfahren für die Konservierung einer feuchten Biomasse unter Hinzufügung in ebendiese einer Mischung aus Harnstoffphosphat und Harnstoff vorzugsweise in fester Form, gekennzeichnet darin, dass sich die Mischung aus 3 bis 30% Harnstoffphosphat und 97% bis 70% Harnstoff zusammensetzt, dass die verwendete Menge dieser Mischung zwischen 3% und 20% des trockenen Stoffgehaltes der Masse beträgt und darin, dass die Masse während wenigstens eines Minimums an Zeit gemäss der umgebenden Temperatur, der Feuchtigkeit und des Säuregehalts der Masse konserviert wird, woraus folgt, dass der Stickstoff und der Phosphor in der Mischung Harnstoff/Harnstoffphosphat mit der organischen Masse reagieren, indem sie Stickstoffverbindungen bilden, die für die Verdauung der Tiere geeignet sind.

## Revendication

Procédé pour la conservation d'une biomasse humide par addition d'un mélange de phosphate d'urée et d'urée, de préférence sous forme solide, à la biomasse, caractérisé en ce que le mélange se compose de 3 à 30% de phosphate d'urée et de 97 à 70% d'urée, en ce que la quantité utilisée de ce mélange est comprise entre 3 et 20% de la teneur en matières sèches de la masse et en ce que la masse est conservée pendant le minimum de temps au moins en fonction de la température ambiante, de l'humidité et du degré d'acidité de la masse, d'où il résulte que l'azote et le phosphore du mélange urée/phosphate d'urée réagissent avec la masse organique en formant des composée azotés qui conviennent pour la digestion des animaux.